# EUROPÄISCHE PATENTSCHRIFT

(11) **EP 2 426 080 B1**
(45) Veröffentlichungstag und Bekanntmachung des Hinweises auf die Patenterteilung: **23.04.2014**
(21) Anmeldenummer: 11177676.1
(22) Anmeldetag: 16.08.2011
(51) Int. Cl.: B67C 11/02, B65D 3/26, B65D 5/72, B31D 5/00, B65B 39/00, B67C 11/00

(54) **Verfahren zur Herstellung eines Trichters, Trichter und Behälter mit Trichter**
Method for manufacturing a funnel, funnel and container with funnel
Procédé de fabrication d'un entonnoir, entonnoir et récipient avec entonnoir

(30) Priorität: 03.09.2010 DE 102010045176
(43) Veröffentlichungstag der Anmeldung: 07.03.2012
(73) Patentinhaber: Michael Hörauf Maschinenfabrik GmbH u. Co. KG, 73072 Donzdorf (DE)
(72) Erfinder: Messerschmidt, Uwe, 73095 Albershausen (DE); Aubele, Holger, 89558 Böhmenkirch (DE); Stahlecker, Werner, 73033 Göppingen (DE)
(74) Vertreter: Patentanwälte Ruff, Wilhelm, Beier, Dauster & Partner

(56) Entgegenhaltungen:
- EP-A2- 2 199 222
- WO-A1-2007/009170
- WO-A1-2009/130916
- DE-C- 296 471
- GB-A- 819 832
- GB-A- 1 567 162
- JP-A- 2009 262 957
- US-A1- 2002 074 247
- US-B1- 6 343 710

## Beschreibung

Die Erfindung betrifft ein Verfahren zur Herstellung eines Trichters aus einem Flachmaterial und einen Trichter gemäß dem Oberbegriff des Patentanspruchs 14 aus einem Flachmaterial, insbesondere aus einem kunststoffbeschichteten Papier. Die Erfindung betrifft weiter einen Behälter für ein pulverförmiges und/oder flüssiges Medium umfassend einen in einem Ausguss- oder Ausschüttbereich angeordneten Trichter.

Ein gattungsgemäßer Trichter ist aus der WO 2007/009 170 A1 bekannt, wobei der Trichter einen in Wesentlichen zylindrischen Auslassbereich aufweist.

Ein Behälter für ein pulverförmiges oder flüssiges Medium, welcher einen in einem Ausguss- oder Ausschüttbereich, auch als Auslassbereich bezeichnet, angeordneten Trichter aufweist, ist beispielsweise aus der JP 2009-262957 A bekannt. Der Behälter ist dabei als eine im Wesentlichen kreiszylinderförmige Röhre ausgebildet, in welche der Trichter eingesetzt ist. Der eingesetzte Trichter dient einem verbesserten Ausgießen oder Ausschütten des Mediums. Gemäß JP 2009-262957 A ist der Trichter aus einem Kunststoff geformt. Ein Formen eines derartigen Trichters erfolgt beispielsweise in einem Spritzgussverfahren, durch welches komplexe Formen herstellbar sind.

Insbesondere bei Einwegverpackungen besteht jedoch ein Bedarf, einen Einsatz von Kunststoff in der Verpackung zu reduzieren, um sowohl kostengünstiger, als auch umweltfreundlicher zu produzieren.

Auch aus der internationalen Offenlegungsschrift WO 2009/130916 A1 ist ein Trichter mit zylindrischem Auslassbereich bekannt.

Schließlich zeigt die US-Patentschrift US 6,343,710 B1 einen Behälter mit einem Trichter, der einen im Wesentlichen zylindrischen Auslassbereich aufweist.

Es ist daher eine Aufgabe der Erfindung, ein Verfahren zur Herstellung eines Trichters, ein Werkzeug zur Durchführung des Verfahrens und einen Trichter aus einem Flachmaterial, insbesondere aus einem kunststoffbeschichteten Papier, sowie einen Behälter für ein pulverförmiges und/oder flüssiges Medium umfassend einen in einem Ausguss- oder Ausschüttbereich angeordneten Trichter zu schaffen.

Diese Aufgaben werden gelöst durch ein Verfahren mit den Merkmalen des Anspruchs 1, einen Trichter mit den Merkmalen des Anspruchs 14 und einen Behälter mit den Merkmalen des Anspruchs 16. Weitere Vorteile der Erfindung ergeben sich aus den Unteransprüchen.

Die Aufgabe wird insbesondere gelöst durch ein Verfahren zur Herstellung eines Trichters aus einem Flachmaterial, wobei ein Flachmaterial-Zuschnitt zu einer trichterförmigen Hülse mit einer Auslassöffnung, einer Einlassöffnung und einem Öffnungswinkel geformt wird und die trichterförmige Hülse wenigstens in einem Teilbereich unter Aufweitung des Öffnungswinkels gestaucht wird.

Im Zusammenhang mit der Erfindung bezeichnet der Ausdruck "trichterförmige Hülse" eine Hülse, deren Durchmesser in Axialrichtung von einer Einlassöffnung in Richtung einer Auslassöffnung oder umgekehrt abnimmt. Bei einer üblichen Verwendung eines fertigen Trichters ist die Einlassöffnung größer als die Auslassöffnung. Als Auslassöffnung wird daher im Zusammenhang mit der Erfindung eine Öffnung der trichterförmigen Hülse bezeichnet, welche einen geringeren Durchmesser aufweist. Als Einlassöffnung wird eine zweite, der Auslassöffnung gegenüberliegende Öffnung der trichterförmigen Hülse bezeichnet. In vorteilhaften Ausgestaltungen weist die trichterförmige Hülse einen im Wesentlichen konische Form auf. Eine derartige im Wesentlichen rotationssymmetrische Form erlaubt eine einfache Weiterverarbeitung. In anderen Ausgestaltungen ist eine rechteckförmige Grundform der Hülse bzw. des daraus geformten Trichters vorgesehen. Die Form der Hülse ist prinzipiell beliebig und wird entsprechend der Form des Behälters, in dem der Trichter angeordnet werden soll, festgelegt. Es ist möglich, einen Trichter in beliebig geformten Dosen anzubringen.

Bei einem Herstellen einer trichterförmigen Hülse, beispielsweise durch Wickeln oder Rollen, ist ein maximaler Öffnungswinkel fertigungstechnisch begrenzt. Große Öffnungswinkel sind nur bei entsprechend vergrößerten Gesamthöhen des Trichters realisierbar. Durch ein Stauchen der Hülse ist es möglich, einen Trichter zu schaffen, welcher zumindest abschnittsweise einen flacheren, d.h. einen größeren Öffnungswinkel aufweist und bei welchem somit ein Verhältnis von Durchmesser zu Höhe vergrößert wird. Dadurch ist bei Einsatz des Trichters in einem Behälter ein Nutzraum für ein pulverförmiges oder flüssiges Medium in dem Behälter vergrößert. In einer Ausgestaltung wird ein Öffnungswinkel der Hülse über die gesamte Höhe aufgeweitet. Der Öffnungswinkel der unverformten Hülse ist in einer Ausgestaltung gering, beispielsweise kleiner 10°. Vorzugsweise sind jedoch Öffnungswinkel größer 10° vorgesehen.

Gemäß einer Ausgestaltung des Verfahrens ist vorgesehen, dass bei einem Stauchen ein sich an die Auslassöffnung anschließender Bereich eingeschnürt wird, sodass ein im Wesentlichen zylindrischer Auslassbereich geschaffen wird. Dadurch wird eine Trichterform mit guten Fließbedingungen für ein durch den geschaffenen Trichter geführtes Medium erzielt.

In vorteilhaften Ausgestaltungen erfolgt ein Verformen mittels einem Werkzeug mit wenigstens zwei Werkzeugteilen. Gemäß einer Ausgestaltung des Verfahrens ist dabei vorgesehen, dass zum Stauchen die trichterförmige Hülse zwischen zwei komplementären und in Axialrichtung der trichterförmigen Hülse relativ zueinander bewegbaren Werkzeugteilen fixiert und in Axialrichtung mittels einer Zustellbewegung wenigstens eines Werkzeugteils verformt wird. Die Werkzeugteile sind vorzugsweise als feststehende Matrize und relativ dazu bewegbarer Stempel ausgebildet. Die Außenkontur der Matrize entspricht der Kontur der gestauchten Hülse. Der Stempel wird aus Richtung der Auslassöffnung in Richtung der Matrize bewegt. Die trichterförmige Hülse wird so in eine gewünschte Form gepresst. Die Form der Werkzeuge ist dabei entsprechend einer gewünschten Endform einer Mantelfläche des Trichters in dem gestauchten Bereich geeignet wählbar. Sofern als Flachmaterial ein kunststoffbeschichtetes Papier verwendet wird, ist in vorteilhaften Ausgestaltungen vorgesehen, dass wenigstens eines der zwei Werkzeuge zumindest teilweise erwärmt, insbesondere beheizbar ist.

In einer Weiterbildung der Erfindung ist vorgesehen, dass wenigstens eines der zwei Werkzeugteile, vorzugsweise der Stempel, Aussparungen aufweist, in welche das Flachmaterial bei einem Stauchen fließen kann. Dadurch wird vermieden, dass ein beim Stauchen oder Pressen der trichterförmigen Hülse überschüssiges Material Falten wirft.

Gemäß einer weiteren Ausgestaltung des Verfahrens ist vorgesehen, dass eine Kante der Auslassöffnung versteift wird. Durch die Versteifung wird eine Beschädigungsgefahr im Bereich der Auslassöffnung verringert. Zum Versteifen ist in vorteilhaften Ausgestaltungen vorgesehen, dass das Flachmaterial an der Auslassöffnung umgeschlagen, beispielsweise nach innen umgeschlagen wird. Bei verschiedenen Anwendungen kann es aber auch vorteilhaft sein, das Flachmaterial an der Auslassöffnung nach außen umzuschlagen. Dies ist ebenfalls möglich. Dabei ist das Flachmaterial bereits verformt. Im Zusammenhang mit der Erfindung wird jedoch auch das bereits verformte Flachmaterial als Flachmaterial bezeichnet. Ein Umschlagen erfolgt vorzugsweise in mindestens zwei Arbeitsschritten, wobei das Umschlagen auch in einem Arbeitsschritt erfolgen kann und mittels eines Stempels das Flachmaterial, insbesondere Papier, durch die Öffnung selbst hindurchgedrückt wird. Nach einem Formen der trichterförmigen Hülse durch Rollen oder Aufwickeln ist vielfach nicht sichergestellt, dass die Auslassöffnung kreisförmig ist. Bei einem Umschlagen in mehreren Arbeitsschritten wird die Auslassöffnung daher zunächst in eine gewünschte kreisförmige Form gepresst. Hierfür wird in vorteilhaften Ausgestaltungen ein Werkzeug verwendet, welches einen Stempel mit einer konischen Außenkontur aufweist, welcher in die Auslassöffnung eingeführt wird. Aufgrund der Form des Stempels ist ein Einführen des Stempels in die Auslassöffnung vereinfacht. In einem weiteren Schritt erfolgt ein endgültiges Umschlagen des Flachmaterials, wobei ein Stempel mit einer im Wesentlichen kreiszylinderförmigen Außenkontur in die vorgeformte Auslassöffnung eingeführt wird, welcher die endgültige Form der Auslassöffnung bestimmt. Das Werkzeug ist dabei in vorteilhaften Ausgestaltungen ebenfalls zumindest teilweise beheizt. Das Verpressen und auch das Siegeln der Auslassöffnung kann auch mit einem rotierenden, insbesondere abrollenden, Werkzeug erfolgen.

In vorteilhaften Ausgestaltungen erfolgt ein Stauchen der trichterförmigen Hülse nach einem Versteifen der Auslassöffnung, da so die Komplexität der Formen der notwendigen Werkzeuge gering gehalten werden kann.

In einer anderen vorteilhaften Ausgestaltung erfolgt ein Umschlagen des Flachmaterials an der Auslassöffnung wenigstens teilweise in einem gemeinsamen Arbeitsschritt mit dem Stauchen der trichterförmigen Hülse. Dadurch ist die Zahl der Arbeitsschritte insgesamt minimierbar. Eine Minimierung der notwendigen Arbeitsschritte ist dabei unter anderem auch von Vorteil, um eine Anzahl an Bearbeitungsschritten an eine Anzahl an Arbeitsstationen einer Fertigungsanlage anzupassen.

In einer vorteilhaften Weiterbildung des Verfahrens ist vorgesehen, dass an der Kante, welche nach dem Formen der trichterförmigen Hülse deren Auslassöffnung bildet, Aussparungen für eine Entlastung beim Umschlagen eingebracht werden. Die Aussparungen werden in einer Ausgestaltung vor einem Formen der trichterförmigen Hülse eingebracht. Dabei ist beispielsweise vorgesehen, dass die Aussparungen beim Stanzen des Flachmaterial-Zuschnitts ausgebildet werden. In anderen Ausgestaltungen werden die Aussparungen in die gewickelte oder gerollte Hülse eingebracht. Die Aussparungen weisen eine geeignete Form auf, um eine Entlastung beim Umformen des Flachmaterials zu realisieren. Die Aussparungen können sich ausgehend von der Kante mit parallelen Seitenkanten in Richtung von Mantellinien der Kegelform erstrecken und einen kreisförmigen Grund aufweisen oder die Kante kann auch wellenförmig ausgebildet sein. Dabei ist es möglich, Risse in einer Kunststoffbeschichtung eines als Flachmaterial verwendeten kunststoffbeschichteten Papiers zu vermeiden. Derartige Risse führen zu einer Erhöhung der Sauerstoffdurchlässigkeit des Papiers und sind dabei insbesondere bei der Verwendung des Trichters im Auslass eines Behälters von Nachteil.

In vorteilhaften Ausgestaltungen des Verfahrens ist alternativ oder zusätzlich vorgesehen, dass die Auslassöffnung versiegelt wird. Dadurch wird der Schutz der Auslassöffnung gegen Beschädigung ebenfalls verbessert. Ein Versiegeln erfolgt in vorteilhaften Ausgestaltungen mittels eines Siegeldorns und/oder mittels expandierender Siegelbacken.

Um den durch das Verfahren hergestellten Trichter in einen Behälter einzusetzen, wird an dem Trichter weiter vorzugsweise ein Verbindungsbereich ausgeformt. In vorteilhaften Ausgestaltungen wird hierfür im Bereich einer Einlassöffnung das Flachmaterial umgeschlagen, insbesondere nach außen umgeschlagen, sodass ein im Wesentlichen zylindrischer Rand, insbesondere ein Außenrand, geschaffen wird. Über den im Bereich der Einlassöffnung geschaffenen Außenrand ist es möglich, den hergestellten Trichter mit einem Behälter zu verbinden, insbesondere zu verkleben oder einzusiegeln.

In vorteilhaften Ausgestaltungen wird zum Umschlagen des Flachmaterials im Bereich der Einlassöffnung die trichterförmige Hülse zwischen zwei komplementären und in Axialrichtung der trichterförmigen Hülse relativ zueinander bewegbaren Werkzeugteilen fixiert und in eine gewünschte Form gepresst wird. Alternativ kann eines der Werkzeugteile feststehend sein. Ein Umschlagen der trichterförmigen Hülse im Bereich der Einlassöffnung ist in einigen Ausgestaltungen als letzter Arbeitsschritt vorgesehen. In anderen Ausgestaltungen erfolgt dieses Umschlagen vor einem Stauchen der Hülse und/oder einem Versteifen der Auslassöffnung. Das zur Hülse geformte Flachmaterial wird im Bereich der Einlassöffnung in vorteilhaften Ausgestaltungen zeitgleich über den gesamten Umfang umgeschlagen. Dafür ist in einer Ausgestaltung ein Stempel mit einer konischen Außenkontur vorgesehen, durch welchen das Flachmaterial nach außen verformt wird. Ein weiteres Umformen des Rands, sodass eine zylindrische Außenkontur geschaffen wird, erfolgt in einer Ausgestaltung durch einen zweiten Stempel. In vorteilhaften Ausgestaltungen weist der erste Stempel weiter eine Ringnut auf, deren Form an die zu schaffende zylindrische Außenkontur und den Öffnungswinkel der Hülse angepasst ist. Dadurch ist es möglich, den Rand mit einem Werkzeug und einer Zustellbewegung auszuformen. Alternativ erfolgt das Umlegen des Randes der Einlassöffnung oder der Auslassöffnung in nur einem Schritt mittels eines flachen Stempels, dessen Stempelfläche senkrecht zur Vorschubrichtung angeordnet ist. Die Werkzeugteile sind dabei in vorteilhaften Ausgestaltungen beheizt. In anderen Ausgestaltungen erfolgt die Umformung bei Raumtemperatur.

In einer Ausgestaltung führt wenigstens eines der Werkzeugteile eine Rotationsbewegung um eine Längsachse der trichterförmigen Hülse durch.

In einer vorteilhaften Ausgestaltung ist vorgesehen, dass ein vorgefertigter ringsegmentförmiger Flachmaterial-Zuschnitt verwendet wird, welcher zum Formen der trichterförmigen Hülse um einen Wickeldorn gelegt und an den Enden verbunden, insbesondere versiegelt, wird. Die Enden des Zuschnitts überlappen einander dabei vorzugsweise nach einem Wickeln oder Rollen. Die Enden werden miteinander verbunden, beispielsweise verklebt und/oder versiegelt.

Die Aufgabe wird weiter gelöst durch einen Trichter nach Patentanspruch 14 aus einem Flachmaterial, insbesondere einem kunststoffbeschichteten Papier, wobei der Trichter einen im Wesentlichen zylindrischen Auslassbereich aufweist. In vorteilhaften Ausgestaltungen ist vorgesehen, dass der Mantelbereich des Trichters eine unstetige Durchmesseränderung aufweist. Der Trichter ist dabei im Vergleich zu herkömmlichen Trichtern flacher gestaltet und weist ein optimiertes Verhältnis von Höhe zu Durchmesser auf.

Schließlich wird die Aufgabe noch gelöst durch einen Behälter für ein pulverförmiges und/oder flüssiges Medium umfassend einen in einem Innenraum des Behälters angeordneten erfindungsgemäßen Trichter.

Weitere Vorteile der Erfindung ergeben sich aus den Unteransprüchen und aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1:: einen ringsegmentförmigen Flachmaterial-Zuschnitt zum Herstellen eines Trichters;
- Fig. 2:: einen ringsegmentförmigen Flachmaterial-Zuschnitt zum Herstellen eines Trichters ähnlich Fig. 1 mit Aussparungen an einer Kante;
- Fig. 3:: eine aus dem ringsegmentförmigen Flachmaterial-Zuschnitt gemäß Fig. 1 geformte trichterförmige Hülse;
- Fig. 4:: eine aus dem ringsegmentförmigen Flachmaterial-Zuschnitt gemäß Fig. 2 geformte trichterförmige Hülse;
- Fig. 5:: ein Versiegeln der Enden der des ringsegmentförmigen Flachmaterial-Zuschnitt gemäß Fig. 1 nach Formen der trichterförmigen Hülse;
- Fig. 6:: einen ersten Arbeitsschritt zum Versteifen einer Auslassöffnung bei einem erfindungsgemäßen Verfahren gemäß einer ersten Ausführungsform;
- Fig. 7:: einen zweiten Arbeitsschritt zum Versteifen einer Auslassöffnung bei einem erfindungsgemäßen Verfahren gemäß der ersten Ausführungsform;
- Fig. 8:: einen Arbeitsschritt zum Versiegeln der Auslassöffnung bei einem erfindungsgemäßen Verfahren gemäß der ersten Ausführungsform;
- Fig. 9:: einen alternativen Arbeitsschritt zum Versiegeln der Auslassöffnung gemäß Fig. 8;
- Fig. 10:: einen Arbeitsschritt zum Stauchen der trichterförmigen Hülse bei einem erfindungsgemäßen Verfahren gemäß der ersten Ausführungsform;
- Fig. 11:: einen Arbeitsschritt zum Umschlagen einer Einlassöffnung der trichterförmigen Hülse bei einem erfindungsgemäßen Verfahren gemäß der ersten Ausführungsform in einem ersten Zustand;
- Fig. 12:: den Arbeitsschritt gemäß Fig. 11 in einem zweiten Zustand;
- Fig. 13:: eine fertige Trichterform in einer ersten Ausgestaltung;
- Fig. 14:: eine fertige Trichterform in einer zweiten Ausgestaltung;
- Fig. 15:: einen Arbeitsschritt zum Umschlagen einer Einlassöffnung der trichterförmigen Hülse bei einem erfindungsgemäßen Verfahren gemäß einer zweiten Ausführungsform in einem ersten Zustand;
- Fig. 16:: den Arbeitsschritt gemäß Fig. 15 in einem zweiten Zustand;
- Fig. 17:: einen ersten Arbeitsschritt zum Versteifen einer Auslassöffnung bei einem erfindungsgemäßen Verfahren gemäß einer zweiten Ausführungsform;
- Fig. 18:: einen zweiten Arbeitsschritt zum Versteifen einer Auslassöffnung bei einem erfindungsgemäßen Verfahren gemäß der zweiten Ausführungsform;
- Fig. 19:: einen Arbeitsschritt zum Versiegeln der Auslassöffnung bei einem erfindungsgemäßen Verfahren gemäß der zweiten Ausführungsform;
- Fig. 20:: einen alternativen Arbeitsschritt zum Versiegeln der Auslassöffnung gemäß Fig. 19;
- Fig. 21:: einen Arbeitsschritt zum Stauchen der trichterförmigen Hülse bei einem erfindungsgemäßen Verfahren gemäß der zweiten Ausführungsform;
- Fig. 22:: einen Arbeitsschritt zum Stauchen der trichterförmigen Hülse bei einem erfindungsgemäßen Verfahren gemäß einer dritten Ausführungsform;
- Fig. 23:: einen Arbeitsschritt zum Versiegeln der Auslassöffnung bei einem erfindungsgemäßen Verfahren gemäß der dritten Ausführungsform;
- Fig.24:: einen alternativen Arbeitsschritt zum Versiegeln der Auslassöffnung gemäß Fig. 23;
- Fig. 25:: einen Arbeitsschritt zum Umschlagen einer Einlassöffnung der trichterförmigen Hülse bei dem erfindungsgemäßen Verfahren gemäß der dritten Ausführungsform in einem ersten Zustand,
- Fig. 26:: den Arbeitsschritt gemäß Fig. 15 in einem zweiten Zustand,
- Fig. 27:: einen ringsegmentförmigen Flachmaterialzuschnitt zum Herstellen eines Trichters mit Aussparungen an einer Kante,
- Fig. 28:: einen ersten Arbeitsschritt zum Versteifen einer Auslassöffnung bei einem erfindungsgemäßen Verfahren gemäß einer vierten Ausführungsform,
- Fig. 29:: einen Arbeitsschrift zum Versiegeln der Auslassöffnung bei dem erfindungsgemäßen Verfahren gemäß der vierten Ausführungsform,
- Fig. 30:: einen Arbeitsschritt zum Umschlagen einer Einlassöffnung der trichterförmigen Hülse bei dem erfindungsgemäßen Verfahren gemäß dervierten Ausführungsform in einem ersten Zustand,
- Fig. 31:: den Arbeitsschritt der Fig. 30 zum Umschlagen einer Einlassöffnung der trichterförmigen Hülse in einem zweiten Zustand,
- Fig. 32:: das Einpressen von Rillen in den umgeschlagenen Rand der Einlassöffnung anschließend an den Arbeitsschritt der Fig. 31,
- Fig.33:: einen fertiggestellten Trichter gemäß der vierten Ausführungsform der Erfindung,
- Fig. 34:: einen erfindungsgemäßen Behälter mit darin angeordnetem Trichter gemäß Fig. 33 und in einer Schnittansicht und
- Fig. 35:: den Behälter der Fig. 34 in Schnittansicht von schräg oben.

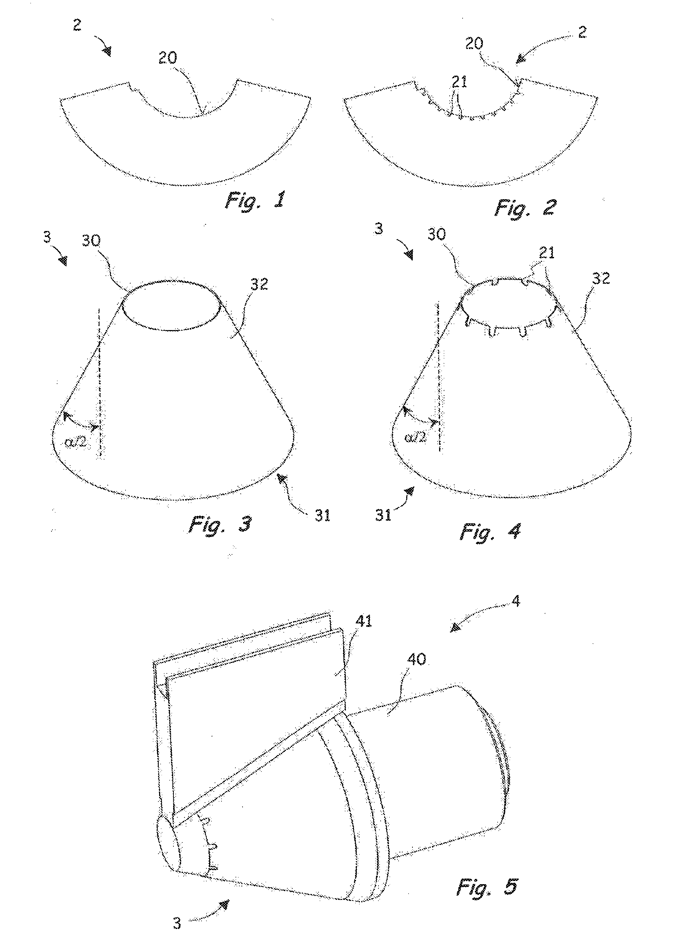

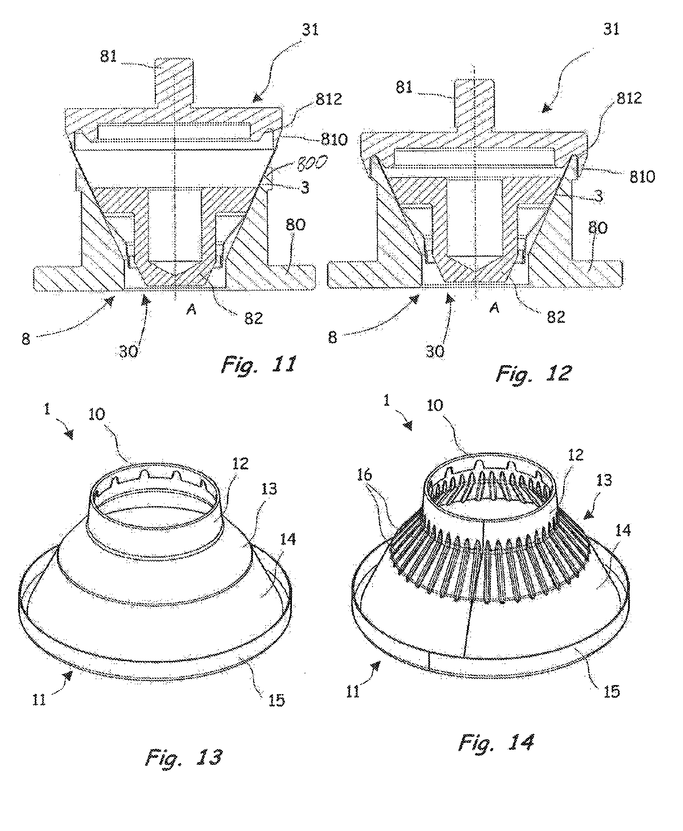

Die Fig. 1 bis 12 zeigen schematisch verschiedene Schritte und Zwischenprodukte zur Herstellung eines erfindungsgemäßen Trichters 1 aus einem kunststoffbeschichteten Papier, wie er in den Fig. 13 und 14 in einer fertigen Form dargestellt ist.

Der Trichter 1 gemäß den Fig. 13 und 14 weist eine Auslassöffnung 10 und eine Einlassöffnung 11 auf. Ein sich an die Auslassöffnung 10 anschließender Auslassbereich 12 weist eine im Wesentlichen kreiszylindrische Form auf. Ein Mantelbereich 13, 14 des Trichters 1 weist zwei unterschiedliche Öffnungswinkel auf, wobei ein Öffnungswinkel des Bereichs 13, welcher an den Auslassbereich 12 anschließt, größer ist, als ein Öffnungswinkel des Bereichs 14, welcher an die Einlassöffnung 11 anschließt. An der Einlassöffnung 11 ist ein kreiszylinderförmiger Außenrand 15 vorgesehen, welcher zur Verbindung mit einem nicht dargestellten Behälter mit einer komplementären, kreiszylinderförmigen Innenkontur dient. In dem Mantelbereich 13 sind bei der Ausgestaltung gemäß Fig. 14 Nasen 16, welche in Radialrichtung abragen, vorgesehen.

Bei dem Verfahren gemäß den Fig. 1 bis 12 wird aus einem vorgefertigten Flachmaterial-Zuschnitt 2 in Form eines Ringsegments, wie er in den Fig. 1 und 2 schematisch dargestellt ist, zunächst eine trichterförmige Hülse 3 gemäß Fig. 3 bzw. 4 hergestellt. Die Fig. 1 und 2 zeigen alternative Ausgestaltungen eines Flachmaterial-Zuschnitts 2, wobei in dem in Fig. 2 dargestellten Ausführungsbeispiels des Flachmaterial-Zuschnitts 2 dieser an einer Kante 20 Aussparungen 21 aufweist, deren Funktion später beschrieben wird.

Wie schematisch in Fig. 5 dargestellt, erfolgt ein Formen in vorteilhaften Ausgestaltungen mittels einem Werkzeug 4, umfassend einen Wickeldorn 40. Dabei wird zum Formen der trichterförmigen Hülse 3 der Flachmaterial-Zuschnitt 2 gemäß Fig. 1 oder 2 um den Wickeldorn 40 herumgelegt. Der Flachmaterial-Zuschnitt 2 ist vorzugsweise aus einem kunststoffbeschichteten Papier. Durch eine zusätzliche, optionale thermische Behandlung kann dabei erreicht werden, dass sich der Flachmaterial-Zuschnitt 2 an die Form des Wickeldorns 40 besser anpasst. Wie weiter schematisch in Fig. 5 dargestellt, werden die sich überlappenden Enden des Flachmaterial-Zuschnitts 2 gemäß Fig. 1 nach dem Rollen oder Wickeln versiegelt, verklebt oder auf andere Art und Weise mittels einem Werkzeug 41 miteinander verbunden. Durch das Rollen und Verbinden der Enden werden die in den Fig. 3 und 4 schematisch dargestellten trichterförmigen Hülsen 3 mit einer Einlassöffnung 30, einer Auslassöffnung 31 und einem Öffnungswinkel α geformt, wobei in den Fig. 3 und 4 der halbe Öffnungswinkel α/2 eingezeichnet ist. Die Auslassöffnung 30 weist dabei einen geringeren Durchmesser als die Einlassöffnung 31 auf.

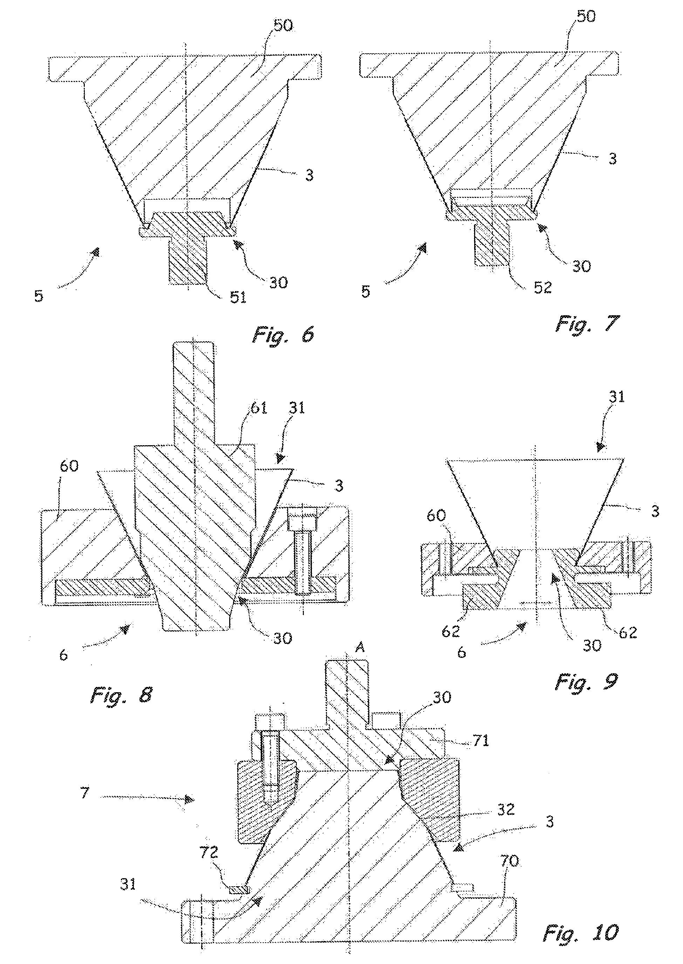

Die Fig. 6 bis 12 zeigen eine erste Ausführungsform des eigentlichen Verfahren zur Herstellung eines erfindungsgemäßen Trichters 1.

Dabei wird zunächst die Auslassöffnung 30 des hülsenförmigen Trichters 3 versteift. Zum Versteifen der Auslassöffnung 30 wird in der dargestellten Ausführungsform das Flachmaterial im Bereich der Kante 20 gemäß den Fig. 1 und 2 nach Formen der trichterförmigen Hülse 3 umgeschlagen und gesiegelt.

Die Fig. 6 und 7 zeigen schematisch ein Umschlagen des Flachmaterials im Bereich der Auslassöffnung 30 mittels eines Werkzeugs 5, umfassend eine Matrize 50 und zwei Stempel 51, 52. In dem dargestellten Ausführungsbeispiel wird die Kante 20 in Richtung eines Innenraums der trichterförmigen Hülse 3 umgeschlagen. Ein Umschlagen erfolgt dabei in zwei Schritten, wobei nacheinander die zwei Stempel 51, 52 zum Einsatz kommen. Die trichterförmige Hülse wird auf der feststehenden Matrize 50 angeordnet ist und mittels der Stempel 51, 52 umgeformt.

Nach einem Formen der trichterförmigen Hülse 3 durch Rollen oder Aufwickeln ist vielfach nicht sichergestellt, dass die Auslassöffnung 30 kreisförmig ist. Bei dem dargestellten Ausführungsbeispiel wird daher zunächst die Auslassöffnung in eine Kreisform gezwungen. Der erste Stempel 51 gemäß Fig. 6 weist zu diesem Zweck einen konischen Bereich auf, welcher in die Auslassöffnung 30 eingeführt wird. Der Stempel 51 ist somit selbstzentrierend.

Der zweite Stempel 52 gemäß Fig. 7 weist eine im Wesentlichen kreiszylindrische Außenkontur auf und dient dazu, die endgültige Form der Auslassöffnung 30 festzulegen.

Um beim Umschlagen gemäß den Fig. 6 und 7 ein Einreißen des Flachmaterial-Zuschnitts 2 gemäß den Fig. 1 und 2 an der Kante 20 zu verhindern, sind die Aussparungen 21 gemäß Fig. 2 von Vorteil, welche so gestaltet sind, dass eine Entlastung beim Umschlagen erreicht wird.

In einem nächsten Schritt des Verfahrens gemäß der ersten Ausführungsform wird das Flachmaterial an der Auslassöffnung gesiegelt. Die Fig. 8 und 9 zeigen schematisch mögliche alternative Verfahren zum Siegeln der Auslassöffnung 30 mit einem Werkzeug 6. Dabei umfasst ein Werkzeug 6 gemäß Fig. 8 eine Matrize 60 und einen Siegeldorn 61, welcher in die trichterförmige Hülse 3 aus Richtung der Einlassöffnung 31 eingeführt ist. Der Siegeldorn 61 und die Matrize 60 weisen zueinander komplementäre konische Flächen auf, zwischen welchen ein Einsiegeln erfolgt.

Bei der alternativen Ausgestaltung gemäß Fig. 9 ist ein Werkzeug 6 mit relativ zueinander in Radialrichtung bewegbaren Siegelbacken 62 vorgesehen. Dabei sind mehrere, über den Umfang zueinander beabstandet verteilt angeordnete Siegelbacken 62 vorgesehen. Ein Siegeln mit den Siegelbacken 62 erfolgt in mindestens zwei Schritten, wobei die Siegelbacken 62 in Umfangsrichtung versetzt werden, sodass über den gesamten Umfang gesiegelt wird.

In einem nächsten Verfahrensschritt, welcher in Fig. 10 dargestellt wird, wird die trichterförmige Hülse 3 in einem an die Auslassöffnung 30 anschließenden Bereich 32 gestaucht. Zu diesem Zweck ist ein Werkzeug 7 mit als Matrize 70 und Stempel 71 ausgebildeten Werkzeugteilen vorgesehen. Die trichterförmige Hülse 3 wird zwischen der Matrize 70 und dem Stempel 71 fixiert und der Stempel in Axialrichtung A zum Verformen zugestellt. Zum Fixieren ist weiter ein Anschlag 72 vorgesehen.

Eine Außenkontur der Matrize 70 entspricht der gewünschten Kontur der gestauchten Hülse 3. Der Stempel 71 wird aus Richtung der Auslassöffnung 30 in Richtung der Matrize 70 bewegt. Die trichterförmige Hülse 3 wird so in eine gewünschte Form gepresst. Die Form des Werkzeugs 7 ist dabei entsprechend einer gewünschten Endform einer Mantelfläche 13 des Trichters 1 gemäß Fig. 13, 14 in dem gestauchten Bereich 32 geeignet wählbar. Sofern als Flachmaterial ein kunststoffbeschichtetes Papier verwendet wird, ist in vorteilhaften Ausgestaltungen vorgesehen, dass wenigstens eines der zwei Werkzeugteile 70, 71 beheizbar ist.

Vorzugsweise sind zumindest an dem im Außenbereich der trichterförmigen Hülse 3 angeordneten Werkzeugteil, vorliegend dem Stempel 71, nicht sichtbare Aussparungen angebracht, in welche das überschüssige Material beim Stauchen oder Verpressen fließen kann. Dadurch ergibt sich die in Fig. 14 dargestellte Außenkontur des Trichters 1 im Bereich 13 mit Nasen 16.

In einem letzten Arbeitsschritt des Verfahrens gemäß der ersten Ausgestaltung wird ein Außenrand 15 des Trichters 1 gemäß den Fig. 13 und 14 geschaffen. Dieser Außenrand 15 dient bei einer Verwendung des Trichters 1 beispielsweise dazu, diesen in einen Behälter, insbesondere eine vorgefertigte Hülse oder Dose einzusetzen und in dieser zu befestigen.

Die Fig. 11 und 12 zeigen zwei Zustände beim Umschlagen der trichterförmigen Hülse 3 im Bereich der Einlassöffnung 31. Ein Werkzeug 8 zum Umschlagen des Außenrands umfasst eine Matrize 80, einen Stempel 81 und einen im Innenraum der trichterförmigen Hülse 3 angebrachten Dorn 82, durch welche eine Verformung bereits fertig verformter Bereiche der Hülse 3 verhindert wird. Die trichterförmige Hülse 3 ist zwischen der Matrize 80 und dem Dorn 82 fixiert. Der Stempel 81 ist relativ dazu in Axialrichtung A bewegbar.

Der Stempel 81 weist eine konische Außenkontur 810 auf und wird zunächst in die Einlassöffnung 31, wie in Fig. 11 dargestellt, eingeführt. Dadurch wird das Flachmaterial im Bereich der Einlassöffnung 31 nach außen verformt. Der Stempel 82 weist weiter eine Ringnut 812 auf, welche die endgültige Form der Einlassöffnung 31 bestimmt. Die Form der Ringnut 812 ist dabei an die zuschaffende zylindrische Außenkontur und den Öffnungswinkel der Hülse 3 angepasst.

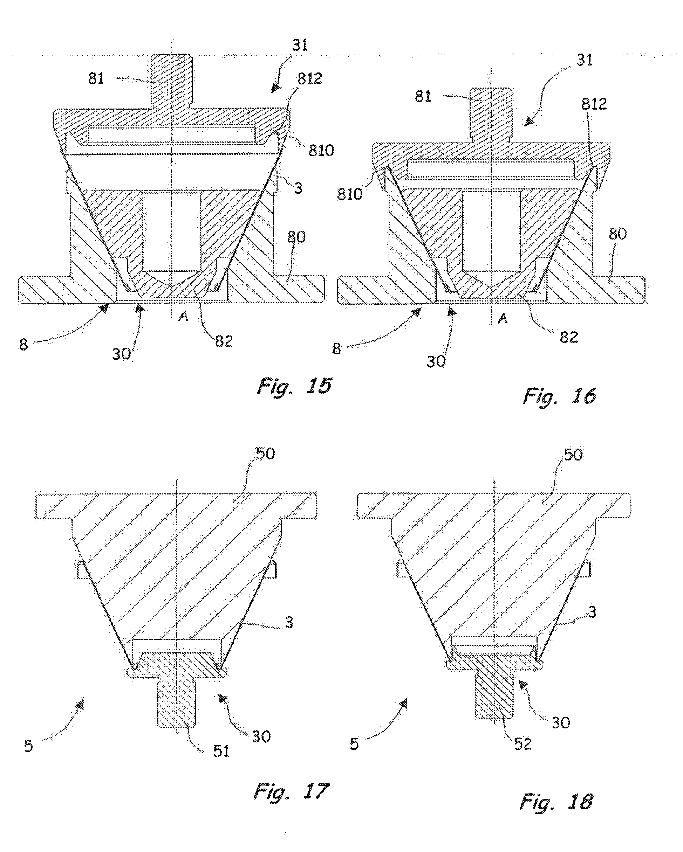

Die Matrize 80 weist einen Vorsprung 800 auf, welcher komplementär zu der Ringnut 812 gestaltet ist und ab Unterschreitung eines festlegbaren Mindestabstands zwischen der Matrize 80 und dem Stempel 81 in die Ringnut 812 eingeführt wird. Dabei wird das zwischen dem Vorsprung 800 und der Ringnut 812 liegende Material umgebogen. Durch die weitere Zustellbewegung wird so der im Wesentlichen kreiszylinderförmige Außenrand 15 gemäß den Fig.13 und 15 geschaffen.

Der Stempel 81 wird dabei in vorteilhaften Ausgestaltungen lediglich in Axialrichtung A bewegt. Zusätzlich ist jedoch eine rotierende Bewegung des Stempels 81 denkbar. Die Werkzeugteile 80, 81, 82 sind in vorteilhaften Ausgestaltungen beheizt. In anderen Ausgestaltungen erfolgt die Umformung bei Raumtemperatur.

Die Fig. 15 bis 21 zeigen ein alternatives Verfahren zum Umformen der trichterförmigen Hülse 3 gemäß Fig. 4 in einem Trichter 1 gemäß den Fig. 13 oder 14. Bei dem Verfahren gemäß den Fig. 15 bis 21 wird zunächst ein Material im Bereich der Einlassöffnung 31 umgeschlagen. In daran anschließenden Arbeitsschritten wird die Auslassöffnung 30 bearbeitet und die trichterförmige Hülse 3 gestaucht. Die Werkzeuge für das Verfahren sind ähnlich oder gleich den Werkzeugen für das Verfahren gemäß den Fig. 6 bis 12 und für gleiche bzw. ähnliche Bauteile werden einheitliche Bezugszeichen verwendet. Auf detaillierte Beschreibungen bereits beschriebener Bauteile wird verzichtet.

Die Fig. 15 und 16 zeigen schematisch zwei Zustände beim Umschlagen des Flachmaterials im Bereich der Einlassöffnung 31, wobei eine Mantelfläche der trichterförmigen Hülse 3 zu Beginn des Verfahrens, wie in Fig. 15 dargestellt, noch nicht weiter bearbeitet ist. Das Werkzeug 8 zum Umschlagen des Flachmaterials im Bereich der Einlassöffnung 31 entspricht dabei im Wesentlichen dem Werkzeug 8 gemäß den Fig. 11 und 12. Das Werkzeug 8 umfasst eine Matrize 80, einen Stempel 81 und einen Dorn 82, wobei der Stempel 81 eine konische Außenkontur 810 und eine Ringnut 812 aufweist. Die Matrize 80 und der Dorn 82 sind in ihrer Form an die Form der noch ungeformten, trichterförmigen Hülse 3 angepasst. Für eine Beschreibung der Funktionsweise des Werkzeugs 8 wird, um Wiederholungen zu vermeiden, auf oben und insbesondere die Beschreibung zu den Fig. 1 und 12 verwiesen.

Die Fig. 17 und 18 zeigen ein Umschlagen des Flachmaterials im Bereich der Auslassöffnung 30 für eine Versteifung derselben. Das Umschlagen erfolgt dabei mit einem Werkzeug 5 gemäß den Fig. 6 und 7, umfassend einen ersten Stempel 51 mit einer konischen Außenkontur und einen zweiten, in einem zweiten Arbeitsschritt zugestellten Stempel 52 mit einer im Wesentlichen kreiszylindrischen Außenkontur. Für eine weitere Beschreibung wird dabei auf die Fig. 6 und 7 verwiesen.

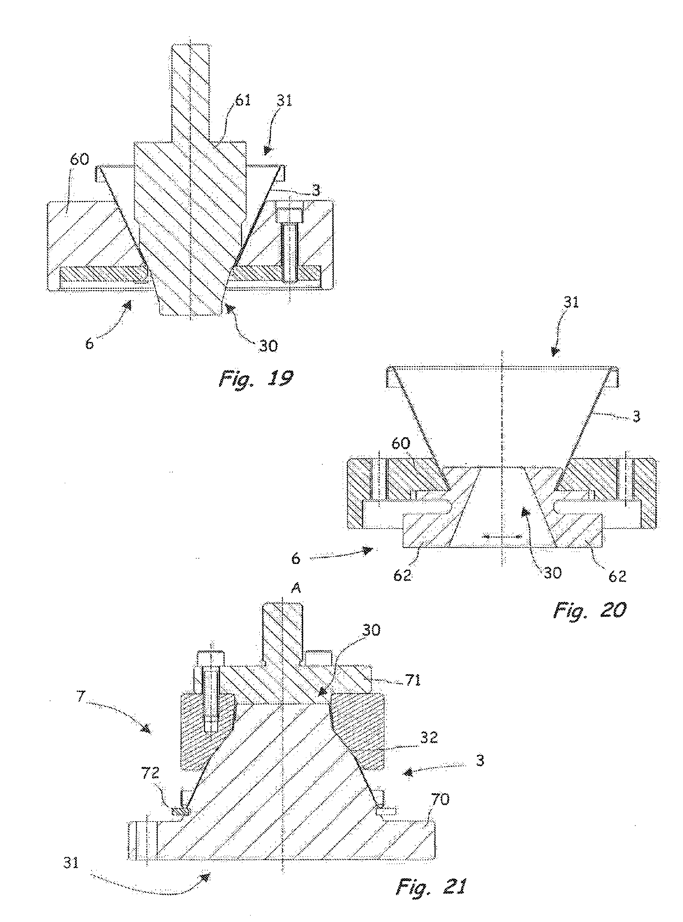

Als nächstes wird ein Rand im Bereich der Einlassöffnung 30 gesiegelt. Die Fig. 19 und 20 zeigen zwei alternative Ausgestaltungen eines Werkzeugs 6 zum Siegeln. Für eine Beschreibung des Werkzeugs 6 wird auf die Beschreibung zu den Fig. 8 bzw. 9 verwiesen.

Fig. 21 zeigt schließlich ein Stauchen der trichterförmigen Hülse 3, so dass ein Öffnungswinkel in einem Teilbereich 32 der Mantelfläche aufgeweitet wird. Im Unterschied zu dem Werkzeug 7 gemäß Fig. 10 ist ein Abstand zwischen dem Stempel 71 und dem Anschlag 72 verkürzt. Im Übrigen wird jedoch auf die Beschreibung zu Fig. 10 verwiesen. Mit Abschluss des Stauchens gemäß Fig. 21 ist somit ein Trichter gemäß Fig. 13 oder 14 geschaffen, wobei gegebenenfalls Nasen 16 in dem beim Stauchen gemäß Fig. 21 verformten Bereich 32 ausgebildet werden.

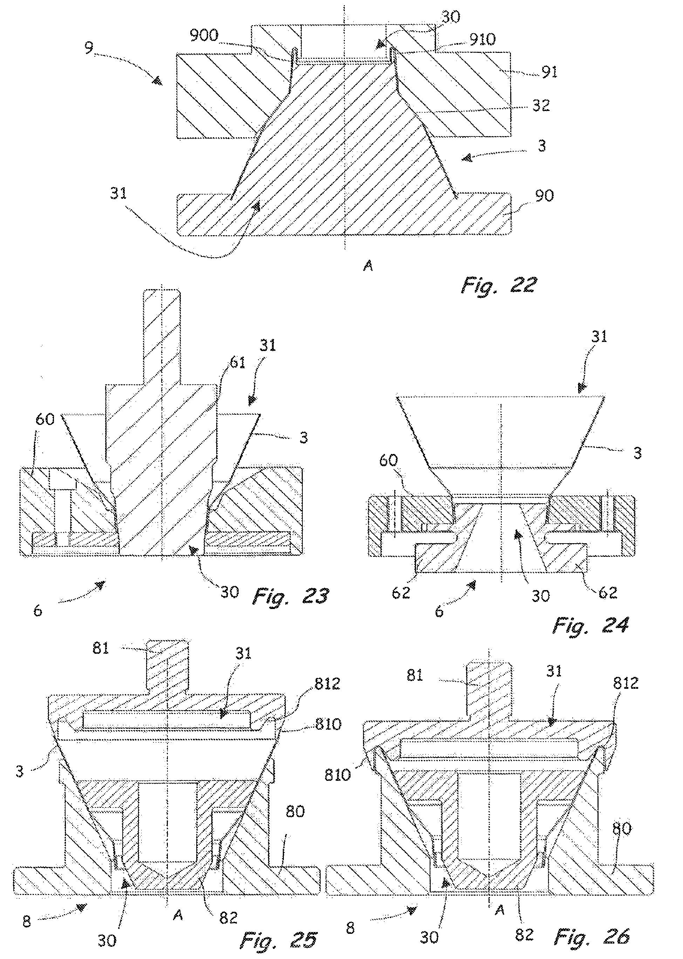

Die Fig. 22 bis 26 zeigen eine dritte Ausführungsform eines erfindungsgemäßen Verfahrens zum Umformen einer trichterförmigen Hülse 3 gemäß Fig. 4 in einen Trichter 1 gemäß den Fig. 13 und 14.

Dabei erfolgt in einer in Fig. 22 dargestellten Arbeitsstation an einem Werkzeug 9 umfassend eine Matrize 90 und einen Stempel 91 gleichzeitig ein Stauchen eines Teilbereichs 32 der Mantelfläche zum Aufweiten eines Öffnungswinkels der trichterförmigen Hülse 3 und ein Versteifen der Auslassöffnung 30 durch Umschlagen des Flachmaterials in dem entsprechenden Bereich. Vor einer Bearbeitung der trichterförmigen Hülse 3 mit dem Werkzeug 9 gemäß Fig. 22 ist in einer Ausgestaltung vorgesehen, dass ein Rand der Auslassöffnung 30 mit einem Werkzeug 5 umfassend den Stempel 51 gemäß Fig. 6 vorgeformt wird. Dadurch wird sichergestellt, dass im Bereich der Auslassöffnung 30 eine kreisförmige Öffnung gegeben ist, in welche das Werkzeugteil 91 einführbar ist. Das Werkzeugteil 91 weist eine Ringnut 910 auf, welche mit einem komplementären Vorsprung 900 an der Matrize 90 zusammenwirkt, wobei zwischen der Ringnut und dem Vorsprung ein Umschlagen des Flachmaterials im Bereich der Auslassöffnung 30 erfolgt.

In einem darauffolgenden Arbeitsschritt erfolgt ein Einsiegeln der Auslassöffnung 30.

Die Fig. 23 und 24 zeigen jeweils ein Werkzeug 6 zum Einsiegeln der Auslassöffnung. Das Werkzeug 6 entspricht dabei dem Werkzeug 6 gemäß den Fig. 8 und 9, auf welche für eine ausführliche Beschreibung verwiesen wird.

In einem letzten Schritt zum Herstellen des Trichters 1 gemäß Fig. 13 oder 14 erfolgt wieder ein Umschlagen des Materials im Bereich der Einlassöffnung 31 mit einem Werkzeug 8 umfassend eine Matrize 80, einen Stempel 81 und einen Dorn 82. Die Hülse 3 ist vor einer Bearbeitung durch das Werkzeug 8 in eine Form gebracht, welche einer Form vor einer Bearbeitung gemäß den Fig. 11 und 12 entspricht. Die Bearbeitung der Hülse 3 erfolgt daher entsprechend den Fig. 11 und 12.

Durch das erfindungsgemäße Verfahren sind verschiedene Trichterformen herstellbar, welche sich aufgrund einer Größe der Öffnungswinkel, einer Anzahl und/oder Position an Stellen, an welchen ein Öffnungswinkel variiert wird, in einem Durchmesser und/oder in einer Form der Nasen 16 gemäß Fig. 14 unterscheiden. Dabei wird in jedem Fall ein Trichter geschaffen, welche ein optimiertes Verhältnis von Durchmesser zu Höhe aufweist und somit platzsparend im Inneren eines Behälters anordenbar ist.

Sämtliche, einer Umformung des Flachmaterials, insbesondere eines kunststoffbeschichteten Papiers, dienenden Werkzeuge sind in vorteilhaften Ausgestaltungen beheizbar gestaltet. Durch eine Wärmezufuhr während der Bearbeitung wird eine Neigung zur Faltenbildung oder zu Rissen verringert. Dabei ist in einigen Ausgestaltungen eine Zwischenkühlung zwischen den einzelnen Arbeitsschritten vorgesehen.

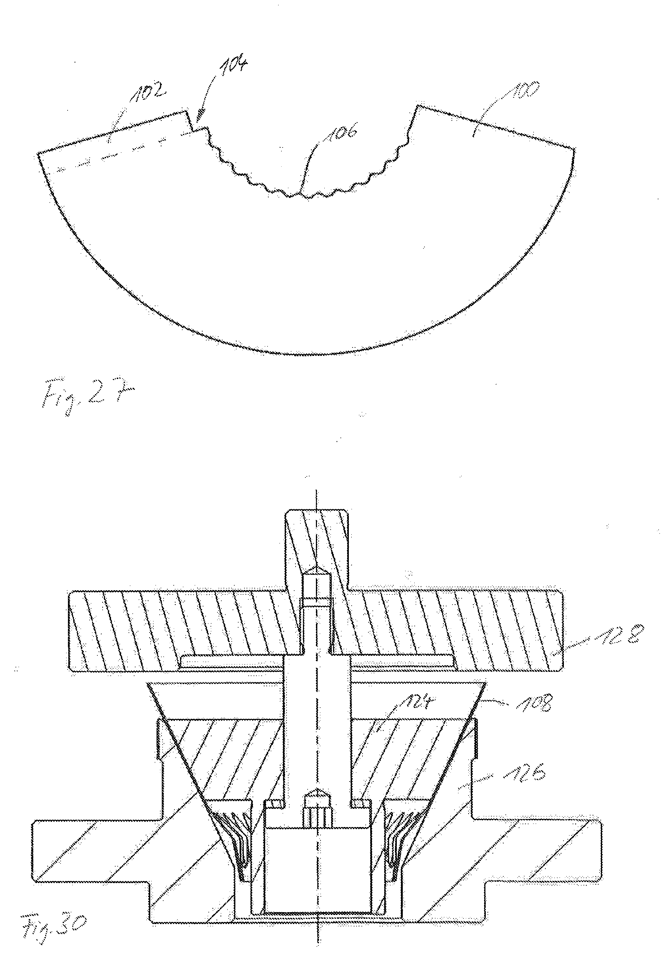

Anhand der Fig. 27 bis 35 wird eine vierte Ausführungsform des erfindungsgemäßen Verfahrens sowie ein mit dem erfindungsgemäßen Verfahren hergestellter Trichter, ein Behälter mit einem solchen Trichter sowie auch die Werkzeuge zur Durchführung des Verfahrens beschrieben.

Fig. 27 zeigt einen Flachmaterialzuschnitt 100 in Form eines Ringsegments. Der Flachmaterialzuschnitt 100 wird, vergleiche Fig. 5, über einen konischen Dorn zu einer kegelstumpfförmigen Hülse gewickelt und im Bereich einer Überlappung 102 dann gesiegelt oder geklebt. Der Bereich der Überlappung ist dabei an der in Fig. 27 oben liegenden Kante mit dem kleineren Radius mit einer Aussparung 104 versehen, so dass in Bereich der Aussparung 104 nach dem Verkleben zu einer kegelstumpfförmigen Hülse nur die einfache Materialstärke vorliegt. Die Aussparung ist rechteckförmig und ist an der Ecke zwischen der gekrümmten Kante mit dem kleineren Radius und der geraden Seitenkante des ringsegmentförmigen Flachmaterialzuschnitts 100 angeordnet. Die Aussparung erleichtert das nachfolgend noch beschriebene Umschlagen des Randes der Auslassöffnungen. Die in Fig. 27 oben liegende Kante 106 des Flachmaterialszuschnitts 100, die den kleineren Radius aufweist, ist wellenförmig ausgestaltet, um die Ausbildung von Rissen beim Umschlagen der Auslassöffnung zu vermeiden.

Die einzelnen Schritte zur Herstellung eines Trichters aus dem Flachmaterialzuschnitt 100 sind, wie bereits beschrieben, das Zuführen des Flachmaterialszuschnitts 100 und das Formen des Flachmaterialszuschnitt 100 auf einem kegelförmigen Dorn zu einer Hülse sowie das Siegeln oder Verkleben im Bereich der Überlappung 102.

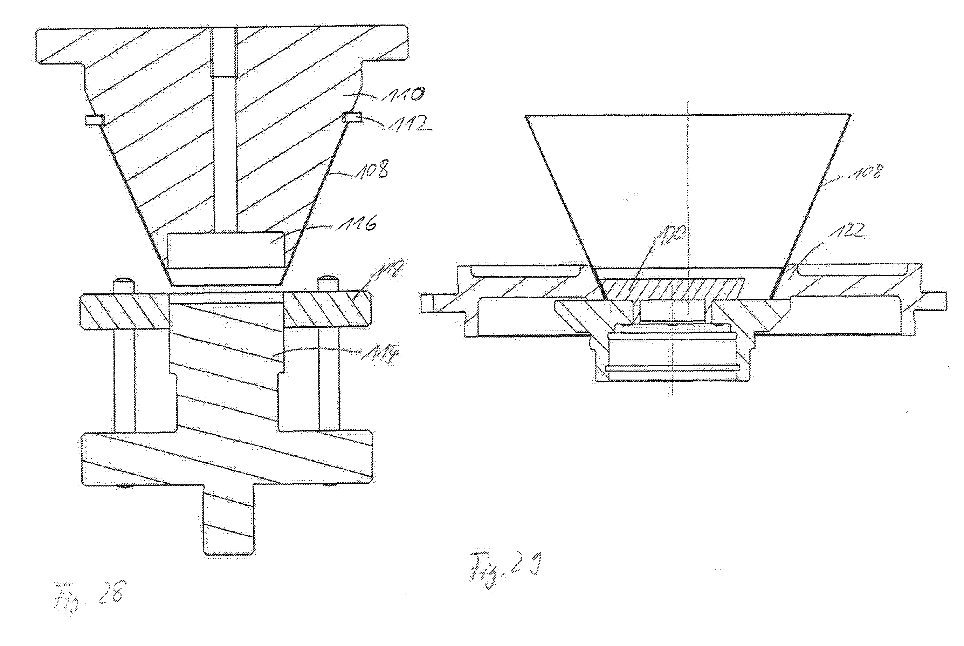

Nachfolgend wird die Auslassöffnung umgeschlagen, siehe Fig. 28. Danach wird der Umschlag der Auslassöffnung beheizt und der Umschlag der Auslassöffnung gesiegelt siehe Fig. 29. Das Siegeln des Umschlags kann mittels eines rotierenden Werkzeugs erfolgen oder mittels eines verschiebbaren Dorns in zwei Schritten erfolgen, wobei der Dorn zwischen den beiden Schritten um 45° versetzt wird.

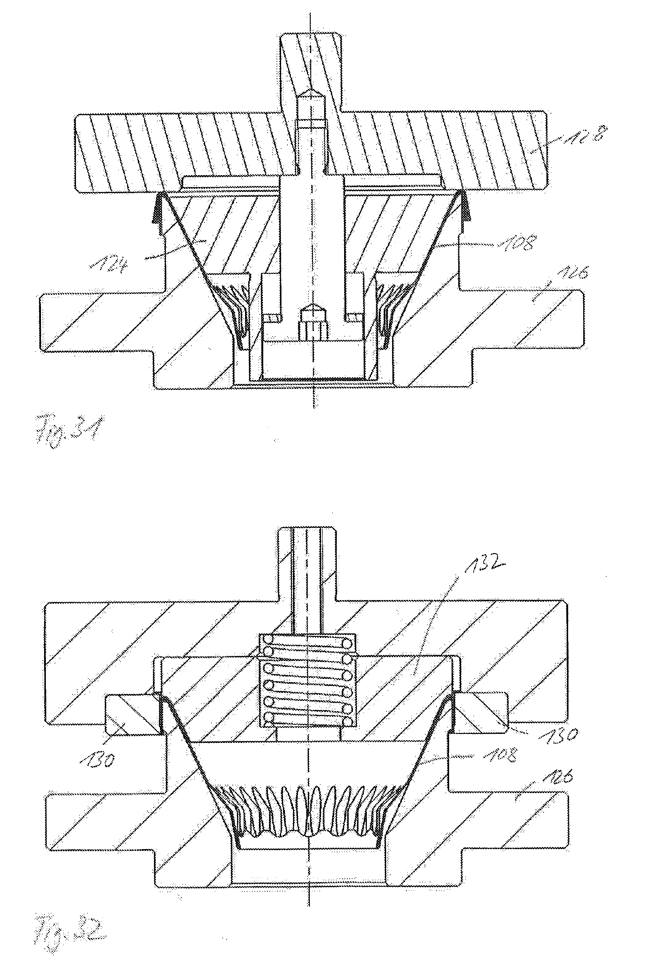

Nachfolgend erfolgt der Umschlag der Einlassöffnung mittels eines flachen, plattenförmigen Stempels, siehe Fig. 30 und 31. Der Umschlag wird dann mittels eines Prägerings nachgeformt, wobei der Prägering Rillen in den umgeschlagenen Rand einprägt, wobei dadurch eine unregelmäßige Krümmung des umgeschlagenen Randes vermieden wird. Der Prägering ist dreigeteilt, um diesen öffnen zu können.

Nachfolgend oder zuvor erfolgt das Einschnüren bzw. Prägen der Trichterform, wie anhand der Fig. 10 sowie 21 und 22 bereits beschrieben wurde.

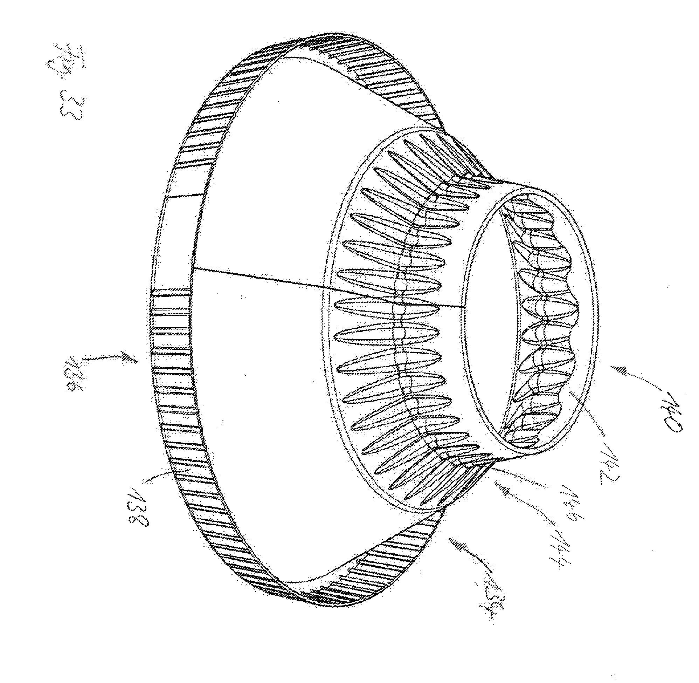

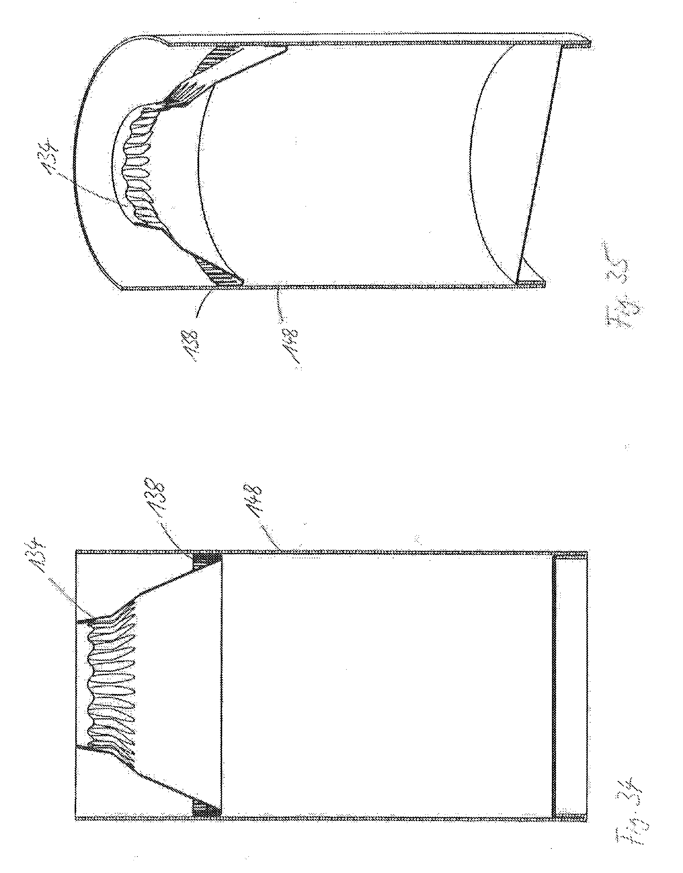

Anschließend kann der Austransport des fertigen Trichters erfolgen, siehe Fig. 33. Der fertige Trichter kann dann in einem Behälter angeordnet werden, siehe Fig. 34 und Fig. 35 und beispielsweise an die Innenwand des Behälters angesiegelt oder angeklebt werden.

Die Arbeitsschritte Formen der Einlassöffnung, Formen der Auslassöffnung und Formen des Trichterwinkels durch Prägen/Einschnüren des Materials können in beliebiger Reihenfolge vorgenommen werden.

Gemäß Fig. 28 ist die aus dem Flachmaterialzuschnitt 100 geformte kegelstumpfförmige Hülse 108 auf einem kegelstumpfförmigen Dorn 110 aufgenommen. Die Hülse 108 liegt mit dem Rand mit dem großen Radius an Anschlägen 112 am Außenumfang des Dornes 110 an. Aufgrund der konischen Form von Matrize 110 und Hülse 108 können die Anschläge 112 auch entfallen. Der Bereich der Auslassöffnung mit dem kleinen Durchmesser ragt über den Dorn 110 hinaus und dieser Rand der Auslassöffnung wird mittels eines Stempels 114 umgeschlagen. Der Umschlag erfolgt dabei in eine zylindrische Aussparung 116 in dem Dorn 110 hinein. Der Stempel 114 weist einen geringfügig größeren Durchmesser auf als das Ende der Hülse 108 mit kleinem Durchmesser. Zunächst wird eine ebene Platte 118, in der der Stempel 114 geführt ist, gegen den in Fig. 28 unteren Rand der Hülse bewegt, sodass diese dadurch annährend parallel zu der Platte 118 angeordnet ist. Der Stempel 114 wird dann in Richtung auf den Dorn 110 zu und in die Ausnehmung 116 hineinbewegt, wodurch gleichzeitig der Rand der Auslassöffnung umgeschlagen wird. Die Platte 118 und der Stempel 114 können auch in zwei getrennten Stationen angeordnet werden. Die Platte 118 kann dann eben und durchgehend ohne Öffnung ausgeführt werden. Alternativ kann das Umschlagen auch nur in einem Schritt und ausschließlich mittels des Stempels 114 erfolgen. Hierzu wird der Stempel 114 etwas breiter ausgeführt als in Fig. 28 dargestellt. Die Ausnehmung 116 wird angepasst und der Rand der Auslassöffnung wird durch Bewegen des Stempels 114 in die Ausnehmung 116 hinein umgeschlagen.

Die Darstellung der Fig. 29 zeigt das Siegeln des Umschlags der Auslassöffnung an der Hülse 108. Hierzu ist eine Andrückrolle 120 vorgesehen, die von innen her gegen den umgeschlagenen Rand der Auslassöffnung der Hülse 108 drückt und auf deren Innenumfang abrollt. Da der Umschlag der Auslassöffnung zuvor oder gleichzeitig beheizt wird, verbinden sich die siegelfähigen Beschichtungen des Umschlags und der Innenseite der Hülse. Während der Bewegung der Andrückrolle 120 wird der umgeschlagene Bereich der Hülse 108 in einer Matrize 122 gehalten.

Die Darstellung der Fig. 30 zeigt die Hülse 108, wobei bereits gemäß den Fig. 10 oder 20 und 21 das Einschnüren und Prägen der Trichterform erfolgt ist. Die Hülse 108 wird nun mittels eines innen angeordneten Stempels 124 und einer außen liegenden Matrize 126 so gehalten, dass lediglich ein umzuschlagender Rand der Einlassöffnung über den Stempel 124 und die Matrize 126 hinausragt. Gegen diesen hinausragenden Rand wird nun ein Stempel 128 mit ebener Stempelfläche bewegt. Der Stempel 128 bewirkt, siehe Fig. 31, das Umschlagen des Randes der Einlassöffnung in den Zustand der Fig. 31. Das Umschlagen des Randes der Einlassöffnung kann dabei in einem einzigen Schritt durch einfaches Bewegen des Stempels 128 gegen den freien Rand der Hülse 108 erfolgen.

Nachfolgend an das Umschlagen des Randes werden gemäß Fig. 32 dann Rillen in den umgeschlagenen Rand der Hülse 108 eingeprägt. Diese Rillen verhindern, dass der umgeschlagene Rand eine von der Kreisform bzw. der vorgesehenen Form abweichende Form einnimmt. Das Einprägen der Rillen erfolgt mittels eines Prägerings 130, an dessen Innenumfang die einzuprägende Rillenstruktur vorgesehen ist. Der Prägering 130 ist über seinen Umfang gesehen geteilt ausgeführt, beispielsweise dreigeteilt, und kann dadurch geöffnet bzw. in Richtung auf den umgeschlagenen Rand der Hülse 108 zugestellt werden. Während des Einprägens der Rillen mittels des Prägerings 130 wird die Hülse 108 in der Matrize 126 und von innen her mittels eines Stempels 132 gehalten.

Nach dem Einprägen der Rillen in die Hülse 108 ist der Trichter 134 fertiggestellt, wie in Fig. 33 zu erkennen ist. Der Trichter 134 weist im Bereich seiner Einlassöffnung 136 den umgeschlagenen und mit Rillen versehenen Rand 138 auf. An seiner Auslassöffnung 140 ist der Trichter 134 mit einem umgeschlagenen Rand 142 versehen. Ein Mittelbereich 144 des Trichters ist zur Erreichung der Trichterform eingeschnürt und geprägt. Durch das Einschnüren entsteht die typische Trichterform, durch das Prägen werden Nasen 146 ausgeformt, die das beim Einschnüren ausweichende Material aufnehmen und eine Abweichung von der Kreisform bzw. der vorgesehenen Form und allgemein die Entstehung von unregelmäßigen Wellen im Material des Trichters 134 verhindern.

Der fertig gestellte Trichter 134 wird dann in einen Behälter 148 eingeschoben, siehe Fig. 34 und Fig. 35. Der Behälter 148 ist bei der dargestellten Ausführungsform kreiszylindrisch ausgeführt und mit einem umgekehrt topfförmigen Boden versehen. Der Trichter 134 kann dann mit seinem umgeschlagenen Rand 138 mit der Innenseite der Zylinderwand des Behälters 148 verbunden werden und beispielsweise an diese angesiegelt werden.

Der Behälter 148 kann dadurch über den Trichter 134 in bequemer Weise entleert werden. Über die Auslassöffnung des Trichters 134, die in der Fig. 34 oben angeordnet ist, kann der Behälter 148 im leeren Zustand auch zunächst befüllt werden und die Auslassöffnung kann dann beispielsweise mit einem Verschluss versehen werden, der beispielsweise angesiegelt wird. Nach dem Abreißen des Verschlusses kann der Behälter 148 dann entleert werden.

## Patentansprüche

1. Verfahren zur Herstellung eines Trichters aus einem Flachmaterial, wobei ein Flachmaterial-Zuschnitt zu einer trichterförmigen Hülse (3) mit einer Auslassöffnung (30), einer Einlassöffnung (31) und einem Öffnungswinkel (α) geformt wird, **dadurch gekennzeichnet, dass** die trichterförmige Hülse (3) wenigstens in einem Teilbereich (32) unter Aufweitung des Öffnungswinkels (α) gestaucht wird.

2. Verfahren nach Anspruch 1, **dadurch gekennzeichnet, dass** bei einem Stauchen wenigstens ein sich an die Auslassöffnung (30) anschließender Bereich eingeschnürt wird, sodass ein im Wesentlichen zylindrischer Auslassbereich (12) geschaffen wird.

3. Verfahren nach Anspruch 1 oder 2, **dadurch gekennzeichnet, dass** bei einem Stauchen die trichterförmige Hülse (3) zwischen zwei komplementären und in Axialrichtung (A) der trichterförmigen Hülse (3) relativ zueinander bewegbaren Werkzeugteilen (70, 71; 90, 91) fixiert und in Axialrichtung mittels einer Zustellbewegung wenigstens eines Werkzeugteils (71; 91) verformt wird.

4. Verfahren nach Anspruch 3, **dadurch gekennzeichnet, dass** wenigstens an einem Werkzeugteile (71; 91) Aussparungen vorgesehen werden, in welche das Flachmaterial bei einem Stauchen fließt.

5. Verfahren nach einem der Ansprüche 1 bis 4, **dadurch gekennzeichnet, dass** in einem Bereich der Auslassöffnung (10) das Flachmaterial umgeschlagen, insbesondere nach innen umgeschlagen wird, sodass die Auslassöffnung (10) versteift wird.

6. Verfahren nach Anspruch 5, **dadurch gekennzeichnet, dass** ein Umschlagen des Flachmaterials an der Auslassöffnung (30) wenigstens teilsweise in einem gemeinsamen Arbeitsschritt mit dem Stauchen der trichterförmigen Hülse (3) erfolgt.

7. Verfahren nach Anspruch 5oder 6, **dadurch gekennzeichnet, dass** an der Kante (20) des Flachmaterial-Zuschnitts (2), welche nach dem Formen der trichterförmigen Hülse (3) deren Auslassöffnung (30) bildet, Aussparungen (21) für eine Entlastung beim Umschlagen eingebracht werden.

8. Verfahren nach einem der Ansprüche 5 bis 7, **dadurch gekennzeichnet, dass** die Auslassöffnung (30) versiegelt wird.

9. Verfahren nach einem der Ansprüche 1 bis 8, **dadurch gekennzeichnet, dass** im Bereich einer Einlassöffnung (31) das Flachmaterial umgeschlagen, insbesondere nach außen umgeschlagen wird, sodass ein im Wesentlichen zylindrischer Rand, insbesondere ein Außenrand (15) geschaffen wird.

10. Verfahren nach Anspruch 9, **dadurch gekennzeichnet, dass** der zylindrische Rand mit Rillen versehen wird.

11. Verfahren nach Anspruch 9 oder 10, **dadurch gekennzeichnet, dass** zum Umschlagen des Flachmaterials im Bereich der Einlassöffnung (31) die trichterförmige Hülse (3) zwischen wenigstens zwei komplementären und in Axialrichtung der trichterförmigen Hülse (3) relativ zueinander bewegbaren Werkzeugteilen (80, 81, 82) fixiert und mittels einer Zustellbewegung wenigstens eines Werkzeugteils (81) verformt wird.

12. Verfahren nach Anspruch 11, **dadurch gekennzeichnet, dass** wenigstens eines der Werkzeugteile (80, 81, 82) eine Rotationsbewegung um eine Längsachse der trichterförmigen Hülse (3) durchführt.

13. Verfahren nach einem der Ansprüche 1 bis 12, **dadurch gekennzeichnet, dass** als Flachmaterial-Zuschnitt (2) ein Ringsegment vorgeformt wird, wobei zum Formen der trichterförmigen Hülse (3) vorzugsweise der Flachmaterial-Zuschnitt (2) um einen Wickeldorn (40) gelegt und an den Enden verbunden, insbesondere versiegelt, wird.

14. Trichter aus einem Flachmaterial, insbesondere einem kunststoffbeschichteten Papier, wobei der Trichter (1) einen im
Wesentlichen zylindrischen Auslassbereich (12) aufweist, **dadurch gekennzeichnet, dass** der Trichter ferner einen einstückig mit dem Auslassbereich ausgebildeten gestauchten oder eingeschnürten Mittelbereich (32; 144) mit aufgeweitetem Öffnungswinkel (α) aufweist, wobei der gestauchte oder eingeschnürte Mittelbereich (32; 144) durch Prägen ausgeformte Nasen (16; 146) aufweist, die das beim Stauchen oder Einschnüren des gestauchten oder eingeschnürten Mittelbereichs (32; 144) ausweichende Material aufnehmen und deren Längsrichtung vom Mittelbereich zu dem Auslassbereich verläuft.

15. Trichter nach Anspruch 14, **dadurch gekennzeichnet, dass** ein Öffnungswinkel (α) des Trichters (1) in einem an den Auslassbereich (12) anschließenden Mantelbereich (13, 14) nicht konstant ist.

16. Behälter für ein pulverförmiges und/oder flüssiges Medium umfassend einen in einem Innenraum des Behälters angeordneten Trichter (1) nach Anspruch 14 oder- 15.

## Claims

1. A method for fabrication of a funnel from flat material, wherein a blank of flat material is shaped to form a funnel-shaped sleeve (3) comprising an outlet opening (30), an inlet opening (31), and an opening angle (α), **characterized in that** the funnel-shaped sleeve (3) is swaged in at least one subregion (32) thereby causing enlargement of the opening angle (α).

2. The method according to claim 1, **characterized in that** during a swaging procedure at least one region adjoining said outlet opening (30) is constricted such that a substantially cylindrical outlet region (12) is created.

3. The method according to claim 1 or 2, **characterized in that** during a swaging procedure, the funnel-shaped sleeve (3) is secured between two complementary tool components (70, 71; 90, 91) that are capable of being moved relatively to each other in the axial direction (A) of the funnel-shaped sleeve (3) and the sleeve is shaped in the axial direction by means of an advancing movement of at least one tool component (71; 91).

4. The method according to claim 3, **characterized in that** at least one of the tool components (71; 91) is provided with recesses into which the flat material flows during a swaging procedure.

5. The method according to any one of the claims 1 to 4, **characterized in that** a region of said outlet opening (10) of the flat material is turned over, more particularly turned over inwardly, such that said outlet opening (10) is stiffened.

6. The method according to claim 5, **characterized in that** turning over of the flat material at said outlet opening (30) is carried out at least partially in a common method step also involving the procedure for swaging said funnel-shaped sleeve (3).

7. The method according to claim 5 or 6, **characterized in that** on the edge (20) of said blank of flat material (2) that after shaping of said funnel-shaped sleeve (3) forms the outlet opening (30) thereof, recesses (21) are provided for relief during the turning over.

8. The method according to any one of the claims 5 to 7, **characterized in that** said outlet opening (30) is sealed.

9. The method according to any one of the claims 1 to 8, **characterized in that** in the region of an inlet opening (31) the flat material is turned over, more particularly turned over outwardly, such that a substantially cylindrical rim, more particularly an outer rim (15) is created.

10. The method according to claim 9, **characterized in that** the cylindrical rim is provided with grooves.

11. The method according to claim 9 or 10, **characterized in that** for the purpose of turning over the flat material in the region of said inlet opening (31), the funnel-shaped sleeve (3) is secured between at least two complementary tool components (80, 81, 82) capable of being moved relatively to each other in the axial direction of said funnel-shaped sleeve (3) and is shaped by means of an advancing movement of at least one tool component (81).

12. The method according to claim 11, **characterized in that** at least one of said tool components (80, 81, 82) performs a rotary movement about a longitudinal axis of the funnel-shaped sleeve (3).

13. The method according to any one of the claims 1 to 12, **characterized in that** the blank of flat material (2) used is a pre-fabricated ring segment and said blank of flat material (2), for the purpose of shaping the funnel-shaped sleeve (3), is preferably placed on a wrapping mandrel (40) and is joined, more particularly sealed, at its ends.

14. A funnel made of flat material, more particularly plastic-coated paper, which funnel (1) has a substantially cylindrical outlet region (12), **characterized in that** the funnel further comprises a swaged or constricted center region (32; 144) configured integrally with the outlet region and having an enlarged opening angle (α), wherein the swaged or constricted center region (32; 144) has projections (16; 146) shaped by embossing for receiving the material spreading during swaging or constricting of the swaged or constricted center region (32; 144) and with the longitudinal direction of the projections extending from the center region to the outlet region.

15. The funnel according to claim 14, **characterized in that** an opening angle (α) of the funnel (1) is not constant in a peripheral region (13, 14) adjoining said outlet region (12).

16. A receptacle for a pulverulent and/or liquid medium, comprising a funnel (1) according to claim 14 or 15 disposed in an interior space of the receptacle.

## Revendications

1. Procédé de fabrication d'un entonnoir constitué d'un matériau plat, une pièce découpée de matériau plat étant formée en forme de douille (3) en forme d'entonnoir avec une ouverture de sortie (30), une ouverture d'entrée (31) et un angle d'ouverture (α), **caractérisé en ce que** la douille (3) en forme d'entonnoir est emboutie au moins dans une région partielle (32) en élargissant l'angle d'ouverture (α).

2. Procédé selon la revendication 1, **caractérisé en ce que** dans le cas d'un emboutissage, au moins une région se raccordant à l'ouverture de sortie (30) est rétrécie de telle sorte qu'une région de sortie essentiellement cylindrique (12) soit produite.

3. Procédé selon la revendication 1 ou 2, **caractérisé en ce que** dans le cas d'un emboutissage, la douille (3) en forme d'entonnoir est fixée entre deux parties d'outil complémentaires (70, 71 ; 90, 91) et déplaçables l'une par rapport à l'autre dans la direction axiale (A) de la douille (3) en forme d'entonnoir et est déformée dans la direction axiale au moyen d'un mouvement d'avance d'au moins une partie d'outil (71 ; 91).

4. Procédé selon la revendication 3, **caractérisé en ce qu'**au moins au niveau d'une partie d'outil (71 ; 91) sont prévus des évidements dans lesquels s'écoule le matériau plat lors d'un emboutissage.

5. Procédé selon l'une quelconque des revendications 1 à 4, **caractérisé en ce que** dans une région de l'ouverture de sortie (10), le matériau plat est replié, en particulier replié vers l'intérieur, de sorte que l'ouverture de sortie (10) soit renforcée.

6. Procédé selon la revendication 5, **caractérisé en ce qu'**un repliement du matériau plat au niveau de l'ouverture de sortie (30) s'effectue au moins en partie dans une étape de travail commune avec l'emboutissage de la douille (3) en forme d'entonnoir.

7. Procédé selon la revendication 5 ou 6, **caractérisé en ce qu'**au niveau de l'arête (20) de la pièce découpée de matériau plat (2) qui, après le formage de la douille (3) en forme d'entonnoir, forme son ouverture de sortie (30) sont pratiqués des évidements (21) pour une décharge des contraintes lors du repliement.

8. Procédé selon l'une quelconque des revendications 5 à 7, **caractérisé en ce que** l'ouverture de sortie (30) est scellée.

9. Procédé selon l'une quelconque des revendications 1 à 8, **caractérisé en ce que** dans la région d'une ouverture d'entrée (31), le matériau plat est replié, en particulier replié vers l'extérieur, de manière à former un bord essentiellement cylindrique, en particulier un bord extérieur (15).

10. Procédé selon la revendication 9, **caractérisé en ce que** le bord cylindrique est pourvu de rainures.

11. Procédé selon la revendication 9 ou 10, **caractérisé en ce que** pour le repliement du matériau plat dans la région de l'ouverture d'entrée (31), la douille (3) en forme d'entonnoir est fixée entre au moins deux parties d'outil complémentaires (80, 81, 82) et déplaçables l'une par rapport à l'autre dans la direction axiale de la douille (3) en forme d'entonnoir et est déformée au moyen d'un mouvement d'avance d'au moins une partie d'outil (81).

12. Procédé selon la revendication 11, **caractérisé en ce qu'**au moins l'une des parties d'outil (80, 81, 82) effectue un mouvement de rotation autour d'un axe longitudinal de la douille (3) en forme d'entonnoir.

13. Procédé selon l'une quelconque des revendications 1 à 12, **caractérisé en ce qu'**un segment annulaire est préformé en tant que pièce découpée de matériau plat (2), de préférence la pièce découpée de matériau plat (2) étant placée autour d'un mandrin d'enroulement (40) et étant connectée aux extrémités, notamment par scellage, afin de former la douille (3) en forme d'entonnoir.

14. Entonnoir constitué d'un matériau plat, en particulier d'un papier revêtu de plastique, l'entonnoir (1) présentant une région de sortie essentiellement cylindrique (12), **caractérisé en ce que** l'entonnoir présente en outre une région centrale (32 ; 144) réalisée d'une seule pièce avec la région de sortie, emboutie ou rétrécie, avec un angle d'ouverture élargi (α), la région centrale emboutie ou rétrécie (32 ; 144) présentant des ergots (16 ; 146) formés par gaufrage qui reçoivent le matériau refoulé lors de l'emboutissage ou du rétrécissement de la région centrale emboutie ou rétrécie (32 ; 144) et dont la direction longitudinale s'étend depuis la région centrale jusqu'à la région de sortie.

15. Entonnoir selon la revendication 14, **caractérisé en ce qu'**un angle d'ouverture (α) de l'entonnoir (1) n'est pas constant dans une région d'enveloppe (13, 14) se raccordant à la région de sortie (12).

16. Récipient pour un milieu pulvérulent et/ou fluide, comprenant un entonnoir (1) selon la revendication 14 ou 15, disposé dans un espace intérieur du récipient.
